# FASCICULE DE BREVET EUROPEEN

(11) **EP 2 748 019 B1**
(45) Date de publication et mention de la délivrance du brevet: **16.12.2015**
(21) Numéro de dépôt: 12787758.7
(22) Date de dépôt: 04.10.2012
(51) Int. Cl.: B60C 11/24

(54) **PROCEDE PERFECTIONNE DE DETECTION DE L'USURE D'UN PNEUMATIQUE**
VERBESSERTES VERFAHREN ZUR ERMITTLUNG DES VERSCHLEISSES EINES REIFENS
IMPROVED METHOD OF DETECTING WEAR OF A TYRE

(30) Priorité: 06.10.2011 FR 1159048
(43) Date de publication de la demande: 02.07.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PATURLE, Antoine, F-63040 Clermont-Ferrand (FR); DUCLOUX, Antoine, F-63040 Clermont-Ferrand (FR)
(74) Mandataire: Dequire, Philippe Jean-Marie Denis
(86) Numéro de dépôt international: PCT/FR2012/052249
(87) Numéro de publication internationale: WO 2013/050710

(56) Documents cités:
- WO-A1-2010/106297
- WO-A1-2011/067535
- FR-A1- 2 940 190
- FR-A1- 2 954 224

## Description

La présente invention concerne un procédé de détection de l'usure d'un pneumatique. Elle s'applique notamment, s'en s'y restreindre, aux pneumatiques pour véhicules de tout type, tourisme ou poids lourds.

On connaît de la publication WO 2011/067535 un procédé de détection de l'usure d'un pneumatique. Le pneumatique comporte plusieurs témoins d'usure sonore équi-répartis circonférentiellement autour du pneumatique et émettant, à partir d'un seuil d'usure radial prédéterminé, un bruit d'empreinte acoustique dont le spectre fréquentiel comporte plusieurs composantes fréquentielles élémentaires formant un peigne de Dirac. Les composantes fréquentielles élémentaires d'un tel peigne sont équi-réparties fréquentiellement, c'est-à-dire que les composantes de chaque couple de composantes adjacentes formant le peigne sont fréquentiellement distantes l'une de l'autre d'un écart fréquentiel sensiblement constant.

Au cours de ce procédé, on acquiert un signal acoustique et on détermine le spectre fréquentiel de ce signal. Le spectre obtenu comprend des composantes fréquentielles élémentaires susceptibles de former, pour certaines d'entre elles, le peigne de Dirac du spectre du bruit d'empreinte acoustique. On recherche donc si un tel peigne de Dirac existe dans le spectre du signal acoustique.

A cet effet, on énumère plusieurs spectres de composantes fréquentielles élémentaires dont les composantes forment des peignes de Dirac. Puis, pour chaque spectre énuméré, on calcule différents indices permettant de sélectionner, parmi tous les spectres énumérés, le spectre qui est le plus susceptible de former le peigne de Dirac recherché.

Enfin, on détermine un indice de confiance du spectre sélectionné. Si cet indice de confiance est supérieur à un seuil prédéterminé, on émet une alerte de l'usure du pneumatique.

Toutefois, dans certaines conditions, notamment des conditions spécifiques de vitesse et d'état de surface de la chaussée, on émet une alerte à tort. En particulier, on observe que le spectre sélectionné par le procédé de l'état de la technique n'est pas celui du peigne de Dirac que les témoins d'usure génèrent.

L'invention a pour but de permettre une détection plus fiable de l'usure du pneumatique.

A cet effet, l'invention a pour objet un procédé de détection de l'usure d'un pneumatique, le pneumatique comprenant au moins un premier élément de sculpture apte à générer un premier bruit d'empreinte acoustique et au moins un deuxième élément de sculpture apte à générer un deuxième bruit d'empreinte acoustique caractéristique de l'usure du pneumatique, procédé dans lequel :
- on acquiert un signal acoustique susceptible de comprendre les premier et deuxième bruits d'empreintes acoustiques,
- on sélectionne, dans le spectre fréquentiel du signal acoustique acquis, un spectre fréquentiel, dit spectre père, susceptible de former le spectre fréquentiel de l'un des premier et deuxième bruits d'empreintes acoustiques,
- on détermine un spectre fréquentiel, dit élagué, en supprimant, du spectre du signal acoustique, au moins en partie le spectre père,
- on sélectionne, dans le spectre élagué, un spectre fréquentiel, dit spectre fils, susceptible de former le spectre fréquentiel de l'autre des premier et deuxième bruits d'empreintes acoustiques,
- on détermine deux indices de confiance, dit de détection, associés à la détection des premier et deuxième bruits d'empreinte acoustique à partir d'au moins une caractéristique de chaque spectre père et fils sélectionné,
- si chaque indice de confiance de détection satisfait une condition prédéterminée relative à la détection de chaque premier et deuxième bruit d'empreinte acoustique, on émet une alerte de la détection de l'usure du pneumatique.

De façon fortuite, les inventeurs à l'origine de l'invention ont découvert que le spectre sélectionné en mettant en oeuvre le procédé de l'état de la technique ne correspondait pas au spectre généré par les éléments de sculptures générant le bruit caractéristique de l'usure du pneumatique, un peigne de Dirac dans le cas de témoins d'usure sonore équi-répartis circonférentiellement, mais, en fait, à un spectre généré par d'autres éléments de sculpture du pneumatique.

En effet, la bande de roulement d'un pneumatique pour véhicule de tourisme comprend des portions circonférentielles réparties circonférentiellement autour de l'axe de révolution du pneumatique. Chaque portion circonférentielle porte un motif choisi parmi un groupe de plusieurs motifs distincts, généralement trois ou quatre motifs. Une telle bande de roulement est appelée bande multi-pas. Bien qu'elle ne comprenne pas de motif périodique, la bande de roulement forme elle-même un motif périodique qui se répète à chaque tour du pneumatique, générant ainsi un bruit d'empreinte acoustique dont le spectre fréquentiel forme un peigne de Dirac.

A l'inverse d'un pneumatique pour véhicule de tourisme, les portions circonférentielles d'un pneumatique pour véhicule de type poids lourd sont toutes identiques. La bande de roulement est appelée bande mono-pas. Si la bande de roulement comporte N portions circonférentielles, chaque portion se répète donc N fois à chaque tour du pneumatique, générant également un bruit d'empreinte acoustique dont le spectre fréquentiel forme un peigne de Dirac.

Ainsi, si le pneumatique comporte des premiers éléments de sculpture formant N1 motif(s) se répétant à chaque tour de roue et des deuxièmes éléments de sculpture formant N2 témoins d'usure sonore équi-répartis circonférentiellement, le spectre fréquentiel du signal acoustique comprend deux peignes de Dirac dont les composantes fréquentielles élémentaires adjacentes sont deux à deux séparées respectivement d'un écart fréquentiel DP1=N1*V/C (pour le peigne dit « pneumatique » généré par les premiers éléments de sculpture) et DP2=N2*V/C (pour le peigne dit « témoins » généré par les deuxièmes éléments de sculpture) dans lesquels V est la vitesse du véhicule et C la circonférence du pneumatique.

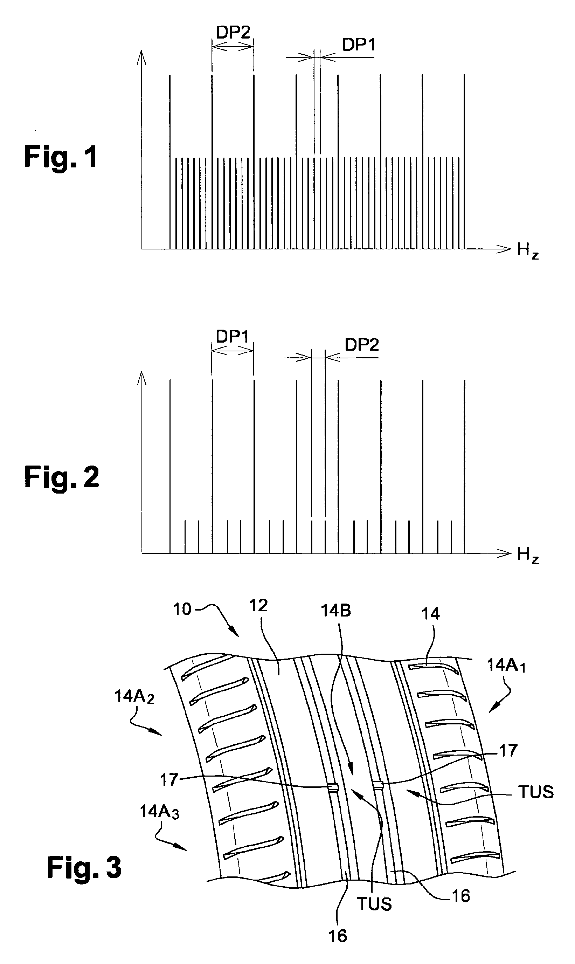

On a représenté sur la figure 1 un spectre fréquentiel théorique du signal acoustique généré par un pneumatique pour véhicule de tourisme comprenant N2 témoins d'usure sonore équi-répartis circonférentiellement. Le spectre fréquentiel théorique comprend des composantes fréquentielles élémentaires dont on a représenté la densité spectrale de puissance en fonction de la fréquence. Le spectre fréquentiel théorique comprend le peigne « pneumatique » (en traits fins) et le peigne « témoins » (en traits gras). Ainsi, dans le cas d'un pneumatique pour véhicule de tourisme dans lequel N1=1, l'écart fréquentiel DP2 du peigne « témoins est un multiple de l'écart fréquentiel DP1 du peigne « pneumatique », c'est-à-dire DP2=N2.DP1. La densité spectrale des composantes de chaque peigne est sensiblement égale de sorte que les composantes du peigne « témoins » s'additionnent aux composantes du peigne « pneumatique » et présentent donc une densité spectrale de puissance deux fois plus grande que celle des composantes du peigne « pneumatique ». Dans ce cas, le spectre généré par les deuxièmes éléments de sculpture forme généralement le spectre père car la densité spectrale de ses composantes est la plus grande ce qui rend ce spectre plus facile à détecter. Le spectre fils forme généralement le spectre généré par les premiers éléments de sculpture.

On a représenté sur la figure 2 un spectre fréquentiel théorique du signal acoustique généré par un pneumatique pour véhicule de type poids lourd comprenant des premiers éléments de sculpture formant N1 motifs de sculptures équi-répartis circonférentiellement et des deuxièmes éléments de sculpture formant N2 témoins d'usure sonore équi-répartis circonférentiellement. Le spectre fréquentiel théorique comprend le peigne « pneumatique » (en traits gras) et le peigne « témoins » (en traits fin). Ainsi, dans le cas d'un pneumatique pour véhicule de type poids-lourd dans lequel N1>N2, l'écart fréquentiel DP2 du peigne « témoins » est un sous-multiple de l'écart fréquentiel DP1 du peigne « pneumatique », c'est-à-dire DP2=N2/N1.DP1. La densité spectrale des composantes du peigne « pneumatique » est plus grande que celle des composantes du peigne « témoins » de sorte que les composantes du peigne « pneumatique » s'additionnent aux composantes du peigne « témoins » et présentent donc une densité spectrale de puissance bien plus grande que celle des composantes du peigne « témoins ». Dans ce cas, le spectre généré par les premiers éléments de sculpture est généralement le spectre père car la densité spectrale de ses composantes est la plus grande ce qui rend ce spectre plus facile à détecter. Le spectre fils est généralement le spectre généré par les deuxièmes éléments de sculpture générant le bruit caractéristique de l'usure.

Les inventeurs à l'origine de l'invention ont tiré avantage de la superposition des deux bruits d'empreinte acoustique pour améliorer la fiabilité de la détection de l'usure du pneumatique. En effet, dans le procédé selon l'invention, il est nécessaire de détecter les deux spectres pour déclencher l'alerte de la détection de l'usure du pneumatique.

En outre, l'invention permet d'éviter la détection d'un faux spectre fils à partir du spectre père. Un tel faux spectre fils est par exemple un peigne comprenant plusieurs composantes fréquentielles élémentaires équi-distantes fréquentiellement parmi les composantes fréquentielles élémentaires d'un spectre père plus dense. Dans le procédé selon l'invention, l'étape de suppression partielle du spectre père permet de conserver uniquement le spectre fils et donc de ne pas détecter un faux spectre fils qui pourrait être construit à partir de composantes du spectre père.

Le procédé permet d'améliorer plus particulièrement la détection de l'usure des pneumatiques d'un véhicule au moyen d'un unique microphone. En effet, dans le cas d'un véhicule comprenant un train avant et un train arrière, les pneumatiques du train avant s'usent plus ou moins rapidement que les pneumatiques du train arrière selon que le véhicule est de type à traction, à propulsion ou à quatre roues motrices. En fonction de la position du microphone, les intensités captées des bruits générés par les pneumatiques des trains avant et arrières sont différentes si bien que le microphone peut capter, selon le type de véhicule, un bruit d'empreinte acoustique caractéristique de l'usure d'une intensité beaucoup plus grande ou faible que l'intensité du bruit d'empreinte acoustique généré par les sculptures des autres pneumatiques. Le procédé selon l'invention permet de profiter de la détection du spectre père du bruit d'empreinte acoustique présentant l'intensité la plus forte pour détecter le spectre fils de l'autre bruit d'empreinte acoustique et confirmer ou infirmer la détection de l'usure du pneumatique.

De préférence, le spectre père comprenant des composantes fréquentielles élémentaires, on conserve les composantes fréquentielles élémentaires du spectre père présentant une densité spectrale de puissance supérieure à un seuil prédéterminé.

Ainsi, on conserve les composantes fréquentielles élémentaires du spectre père formant également les composantes fréquentielles élémentaires du spectre fils que l'on cherche à identifier et à sélectionner.

De préférence, les deuxièmes éléments de sculptures comprennent au moins un, et de préférence plusieurs témoins d'usure sonore équi-répartis circonférentiellement sur le pneumatique.

Selon une caractéristique optionnelle du procédé, on énumère au moins un spectre fréquentiel, dit hypothétique et on détermine au moins une caractéristique fréquentielle de chaque spectre hypothétique.

De préférence, pour chaque spectre hypothétique, on détermine un indice de confiance, dit de sélection, associé à la sélection du spectre hypothétique.

L'indice de confiance de sélection permet de classer les spectres hypothétiques énumérés. Ainsi, en choisissant de façon adaptée l'indice de confiance de sélection, on peut sélectionner la ou les séries hypothétiques les plus susceptibles de former les spectres fréquentiels des premier et deuxième bruits d'empreinte acoustique.

Avantageusement, chaque spectre hypothétique comprenant des composantes fréquentielles élémentaires, la caractéristique fréquentielle du spectre hypothétique est l'écart fréquentiel séparant fréquentiellement chaque composante fréquentielle de chaque spectre hypothétique d'au moins une composante fréquentielle adjacente du spectre hypothétique.

Dans le cas de témoins d'usure équi-répartis circonférentiellement, l'écart fréquentiel permet d'identifier facilement les spectres susceptibles de former les peignes de Dirac des premier et deuxième bruits d'empreinte acoustique. Dans le cas de témoins d'usure répartis différemment, on définit une caractéristique fréquentielle représentative de cette répartition.

De façon préférentielle, on limite la sélection du spectre fils aux spectres hypothétiques dont l'écart fréquentiel est compris dans un intervalle d'écarts fréquentiels déterminé à partir de l'écart fréquentiel du spectre père

Ainsi, l'étape de sélection du spectre fils est restreinte à un intervalle d'écarts fréquentiels comprenant l'écart fréquentiel théorique du spectre fils. Le procédé est ainsi rendu plus rapide. Dans le cas où le spectre père est le spectre du bruit d'empreinte acoustique généré par les premiers éléments de sculpture, l'intervalle d'écarts fréquentiels est limité aux écarts des spectres théoriques du bruit d'empreinte acoustique généré par les deuxièmes éléments de sculpture. Inversement, dans le cas où le spectre père est le spectre du bruit d'empreinte acoustique généré par les deuxièmes éléments de sculpture, l'intervalle d'écarts fréquentiels est limité aux écarts des spectres théoriques du bruit d'empreinte acoustique généré par les premiers éléments de sculpture.

De façon optionnelle, on sélectionne, dans le spectre fréquentiel du signal acoustique acquis, des premier et deuxième spectres fréquentiels, dits potentiels, chaque spectre fréquentiel potentiel étant susceptible de former le spectre fréquentiel d'un des bruits d'empreinte acoustique et on sélectionne le spectre père parmi les premier et deuxième spectres fréquentiels potentiels.

L'étape de sélection des spectres potentiels permet d'améliorer la robustesse et la rapidité du procédé de détection.

De préférence, on sélectionne le premier spectre potentiel parmi les spectres hypothétiques présentant un écart fréquentiel appartenant à un premier intervalle d'écarts fréquentiels prédéterminé, et on sélectionne le deuxième spectre potentiel parmi les spectres hypothétiques présentant un écart fréquentiel appartenant à un deuxième intervalle d'écarts fréquentiels prédéterminé différent du premier.

Les intervalles d'écarts fréquentiels comprennent les écarts fréquentiels théoriques susceptibles de séparer les composantes fréquentielles élémentaires des spectres des bruits d'empreinte acoustique émis par les premier et deuxième éléments de sculpture. Ainsi, on ignore les écarts fréquentiels qui ne peuvent pas constituer les écarts fréquentiels théoriques. Le procédé de détection est ainsi rendu plus rapide.

On détermine les intervalles d'écarts fréquentiels en tenant compte des valeurs extrêmes des paramètres que l'on ne souhaite pas avoir à nécessairement connaître. Ainsi, pour un pneumatique pour véhicule de tourisme pour lequel la vitesse varie entre 30 et 130 km/h, le nombre de témoins varie entre 2 et 8 et la circonférence varie entre 1,60 m et 2,5 m, l'écart fréquentiel du peigne de Dirac du premier bruit d'empreinte acoustique émis par les premiers éléments de sculpture appartient à l'intervalle 3,3 Hz - 22,6 Hz et l'écart fréquentiel du peigne de Dirac du deuxième bruit d'empreinte acoustique émis par les deuxièmes éléments de sculpture appartient à l'intervalle 6,6 Hz - 180,5 Hz et. Pour un pneumatique pour véhicule de type poids lourd pour lequel la vitesse varie entre 30 et 100 km/h, le nombre de motifs se répétant à chaque tour de roue varie entre 45 et 55, le nombre de témoins varie entre 1 et 12 et la circonférence varie entre 2,5 m et 3,5 m, l'écart fréquentiel du peigne de Dirac du bruit d'empreinte acoustique émis par les premiers éléments de sculpture appartient à l'intervalle 107,1 Hz - 611,1 Hz et l'écart fréquentiel du peigne de Dirac du bruit d'empreinte acoustique émis par les deuxièmes éléments de sculpture appartient à l'intervalle 2,4 Hz - 133,3 Hz.

L'invention a également pour objet un programme d'ordinateur comprenant des instructions de code aptes à commander l'exécution des étapes du procédé tel que défini ci-dessus lorsqu'il est exécuté sur un ordinateur.

L'invention concerne aussi un support d'enregistrement de données comprenant, sous forme enregistrée, un programme tel que défini ci-dessus.

L'invention a pour autre objet un procédé de mise à disposition d'un programme tel que défini ci-dessus sur un réseau de télécommunication en vue de son téléchargement.

L'invention sera mieux comprise à la lecture de la description qui va suivre, donnée uniquement à titre d'exemple non limitatif et faite en se référant aux dessins dans lesquels :
- la figure 1 illustre un spectre fréquentiel théorique d'un signal acoustique généré par un pneumatique pour véhicule de tourisme;
- la figure 2 illustre un spectre fréquentiel théorique du signal acoustique généré par un pneumatique pour véhicule de type poids lourd;
- la figure 3 illustre une bande de roulement d'un pneumatique neuf pour véhicule de tourisme;
- la figure 4 illustre une bande de roulement du pneumatique de la figure 1 usé au-delà d'un seuil d'usure et comprenant des premier et deuxième éléments de sculptures aptes à générer respectivement des premier et deuxième bruits d'empreinte acoustique;
- la figure 5 est un spectre fréquentiel théorique d'un signal acoustique théorique généré par le pneumatique de la figure 4;
- la figure 6 est un organigramme d'étapes de traitement du signal acoustique permettant d'obtenir le spectre fréquentiel théorique de la figure 5;
- la figure 7 est un spectre fréquentiel réel d'un signal acoustique réel généré par le pneumatique de la figure 4;
- la figure 8 est un organigramme d'étapes d'énumération de spectres fréquentiels hypothétiques et de sélection de premier et deuxième spectres fréquentiels potentiels;
- la figure 9 est un organigramme d'étapes de sélection d'un spectre père susceptible de former le spectre fréquentiel d'un des premier et deuxième bruits d'empreinte acoustique à partir des premier et deuxième spectres fréquentiels potentiels;
- la figure 10 est un organigramme d'étapes d'énumération de spectres fréquentiels hypothétiques et de sélection d'un spectre fils susceptible de former l'autre spectre fréquentiel des premier et deuxième bruits d'empreinte acoustique.

On a représenté sur la figure 3 un pneumatique à l'état neuf, désigné par la référence générale 10. Le pneumatique 10 est destiné à un véhicule de tourisme. Le pneumatique 10 est sensiblement de révolution autour d'un axe.

Le pneumatique 10 comprend une bande de roulement 12 de forme sensiblement toroïdale et dont la surface externe est munie de sculptures 14. Les sculptures 14 comprennent des premiers et deuxième éléments de sculpture 14A, 14B.

Les premiers éléments 14A de sculpture comprennent des portions 14A₁, 14A₂, 14A₃, ..., 14A₇₅ circonférentielles, en l'espèce soixante-quinze, réparties circonférentiellement autour de l'axe de révolution. Chaque portion 14Aᵢ porte un motif choisi parmi un groupe de plusieurs motifs distincts, généralement trois ou quatre motifs. Les premiers éléments 14A comprennent deux sillons 16 circonférentiels et parallèles, creusés à la surface du pneumatique, de profondeur H prédéterminée lorsque le pneumatique 10 est neuf. Ainsi, chaque portion 14Aᵢ comprend une portion circonférentielle de chaque sillon 16. La profondeur H de ces sillons 16 est de l'ordre de 8 mm et leur largeur est de l'ordre de 10 mm. Les premiers éléments 14A forment donc N1=1 motif de sculptures se répétant à chaque rotation du pneumatique 10 et sont aptes à générer un premier bruit d'empreinte acoustique BEA1, quelle que soit l'usure du pneumatique 10.

Les deuxièmes éléments 14B de sculptures comprennent des témoins d'usure sonores TUS indiquant un seuil d'usure SS. La profondeur de chaque sillon 16 lorsque le seuil SS est atteint est fixée à 2,2 mm, ce qui correspond à un seuil SS=5,8 mm. Chaque témoin d'usure sonore TUS est constitué d'une saillie de gomme 17 agencée transversalement au fond du sillon 16 dans laquelle elle est située et s'étendant radialement à partir du fond de ce sillon 16. Lorsque le pneumatique est neuf, chaque saillie 17 présente une hauteur prédéterminée hₛ sensiblement égale à la différence entre la profondeur H des sillons 16 et le seuil SS. Le pneumatique 10 comporte N2=6 ensembles comprenant chacun deux saillies 17. Le pneumatique 10 comprend donc douze saillies 17. Chaque saillie 17 de chaque ensemble est sensiblement alignée axialement avec chaque autre saillie 17 de l'ensemble. Les saillies 17 sont équi-réparties circonférentiellement sur le pneumatique 10. Ainsi, au-delà du seuil SS, lors de la rotation du pneumatique, les saillies 17 entrent à intervalle de temps constant en contact avec le sol lorsque le pneumatique roule à vitesse sensiblement constante. Les deuxièmes éléments 14B sont aptes à générer un deuxième bruit d'empreinte acoustique BEA2 au-delà du seuil d'usure SS. Ce deuxième bruit d'empreinte acoustique BEA2 est donc caractéristique de l'usure du pneumatique 10.

Les saillies 17 sont agencées de manière que, quelle que soit l'usure radiale du pneumatique 10, deux saillies 17 circonférentiellement successives d'un même sillon 16 et le sillon 16 délimitent un espace ouvert à l'air lors de leur passage dans l'aire du contact du pneumatique 10 avec le sol. En l'espèce, la distance séparant deux saillies 17 circonférentiellement successives d'un même sillon 16 est supérieure à une distance prédéterminée, ici la longueur de l'aire de contact, pour que, même au-delà d'un du seuil SS, les saillies 17 et le sillon 16 forment un espace qui reste ouvert à l'air lors de leur passage dans l'aire du contact du pneumatique 10 avec le sol.

Les sculptures 14 comprennent également des témoins d'usure légaux (non représentés) indiquant un seuil d'usure légal. Le seuil d'usure légal est atteint après le seuil SS.

Lorsque le pneumatique 10 est neuf, comme cela est représenté sur la figure 3, la hauteur des saillies 17 est plus petite que la profondeur des sillons 16 de sorte que chaque témoin TUS comprend un espace situé au-dessus des saillies 17, c'est-à-dire au sommet des saillies 17. Ainsi, lorsque le pneumatique 10 est neuf, les deuxièmes éléments 14B ne peuvent entrer en contact avec le sol lors de leur passage dans l'aire de contact du pneumatique 10 avec le sol et ne peuvent donc générer le deuxième bruit d'empreinte acoustique BEA2.

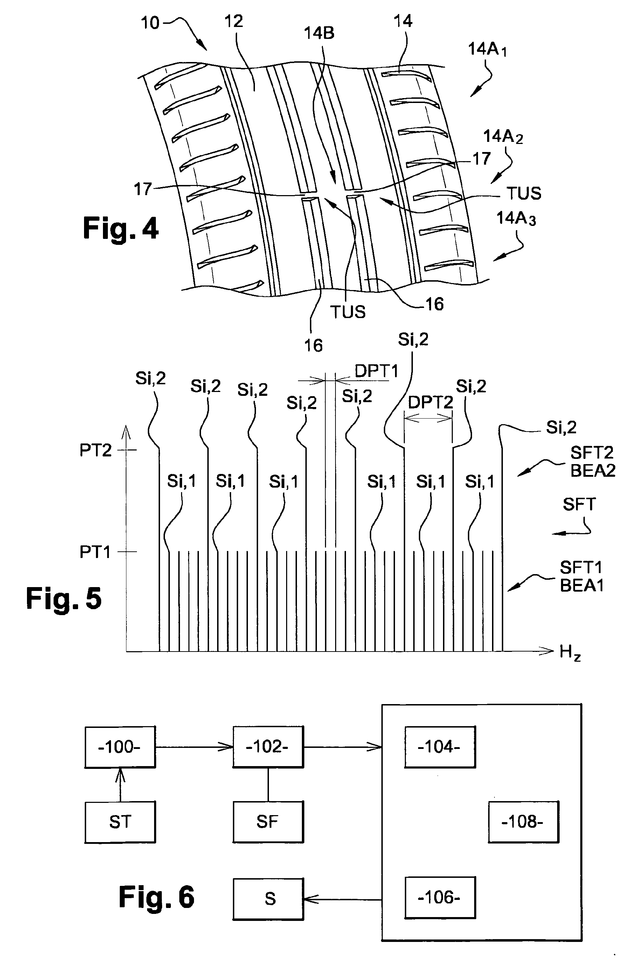

On a représenté sur la figure 4 le pneumatique 10 de la figure 3 usé au-delà du seuil SS.

L'usure de la bande de roulement 12 du pneumatique 10 représentée sur la figure 4 est de 6 mm, c'est-à-dire supérieure au seuil SS, autrement dit supérieure à la distance séparant, lorsque le pneumatique 10 est neuf, le sommet des saillies 17 de la surface de la bande de roulement 12. Compte tenu de l'usure supérieure à SS, le sommet des saillies 17 est au même niveau que la surface de la bande de roulement 12. Au-delà du seuil SS, chaque saillie 17 présente une hauteur inférieure à la hauteur hₛ. Ici, la hauteur est inférieure à 2,2 mm et vaut 2 mm pour une usure de 6 mm. Cette hauteur est égale à la différence entre la profondeur de chaque sillon 16 et l'usure du pneumatique 10. Lorsque le pneumatique 10 est usé au-delà du seuil SS, chaque saillie 17 est agencée de façon à entrer en contact avec sol lors de son passage dans l'aire de contact du pneumatique 10 avec le sol. Elle émet alors un son. Cette succession de contacts entre les saillies 17 et le sol est à l'origine du deuxième bruit d'empreinte acoustique BEA2.

En variante, le pneumatique 10 comprend des deuxièmes éléments 14B différents des saillies 17. Les deuxièmes éléments forment des témoins d'usure sonore au-delà d'un seuil d'usure prédéterminé. Il peut s'agir de cavités sonores comme décrit dans la publication WO 2011/067535.

Le principe de la détection des bruits d'empreinte acoustique BEA1, BEA2 est analogue au principe de détection du bruit d'empreinte acoustique décrit dans la publication WO 2011/067535 appliqué à la compression/détente de l'air emprisonné dans une cavité sonore. Ainsi, la détection du premier bruit d'empreinte acoustique BEA1 généré par les premiers éléments de sculpture 14A formant N1=1 motif se répétant au tour de roue (cas du pneumatique pour véhicule de tourisme) ou N1 motifs circonférentiellement équi-répartis (cas du pneumatique pour véhicule de type poids-lourd) repose sur le même principe que la détection d'un bruit d'empreinte acoustique généré par N1=1 ensemble de cavité(s) sonore(s). La détection du deuxième bruit d'empreinte acoustique BEA2 généré par N2 ensembles de témoins TUS équi-répartis circonférentiellement sur le pneumatique 10 repose sur le même principe que la détection d'un bruit d'empreinte acoustique généré par N2 ensembles de cavité(s) sonore(s) équi-répartie(s) circonférentiellement sur le pneumatique 10.

On a représenté sur la figure 5 la densité spectrale de puissance d'un spectre fréquentiel théorique SFT en fonction de la fréquence. Le spectre SFT est obtenu par traitement d'un signal acoustique théorique émis par le pneumatique 10 usé au-delà du seuil SS, présentant une circonférence C=1,93 m et monté sur le train arrière d'un véhicule circulant à V=90 km.h⁻¹ = 25m.s⁻¹.

Le signal fréquentiel théorique SFT comprend des premier et deuxième spectres fréquentiels théoriques SFT1, SFT2 respectivement des premier et deuxième bruits d'empreinte acoustique BEA1, BEA2. Chaque spectre SFT1, SFT2 forme un peigne de Dirac et comprend respectivement des composantes fréquentielles élémentaires Si,1, Si,2, les composantes adjacentes étant fréquentiellement équi-distantes deux à deux. En réalité, chaque spectre réel SF1, SF2 prend la forme d'un peigne de Dirac édenté, c'est-à-dire duquel plusieurs composantes fréquentielles élémentaires sont absentes. En outre, les composantes fréquentielles élémentaires présentent des densités spectrales de puissance inégales.

Deux composantes fréquentielles élémentaires Si,1 adjacentes (en trait fins) sont séparées l'une de l'autre d'un écart fréquentiel théorique DPT1=N1^{*}V/C=12,9 Hz. De façon analogue, deux composantes fréquentielles élémentaires Si,2 (en trait gras) sont séparées l'une de l'autre d'un écart fréquentiel théorique DPT2=N2*V/C=77,4Hz.

Chaque composante Si,1, Si,2 présente une densité spectrale de puissance théorique respectivement égale à PT1, PT2. Dans le cas théorique représenté à la figure 5, PT1 =PT2.

Nous allons maintenant décrire un procédé de détection de l'usure d'un pneumatique en référence aux figures 6 à 14.

On a représenté sur la figure 6 un organigramme d'étapes de traitement du signal acoustique permettant d'obtenir le spectre fréquentiel de la figure 5.

On acquiert, lors d'une étape 100, un signal acoustique temporel ST susceptible de comprendre les premier et deuxième bruits d'empreinte acoustique BEA1, BEA2. Le signal acoustique ST est obtenu en enregistrant le bruit généré par deux pneumatiques 10 usés au-delà du seuil SS, présentant une circonférence C=1,93 m et montés sur le train arrière d'un véhicule circulant à V=90 km.h⁻¹ = 25m.s⁻¹. La durée de la trame d'acquisition est T=1s et la fréquence d'échantillonnage est Fe=16 384 Hz.

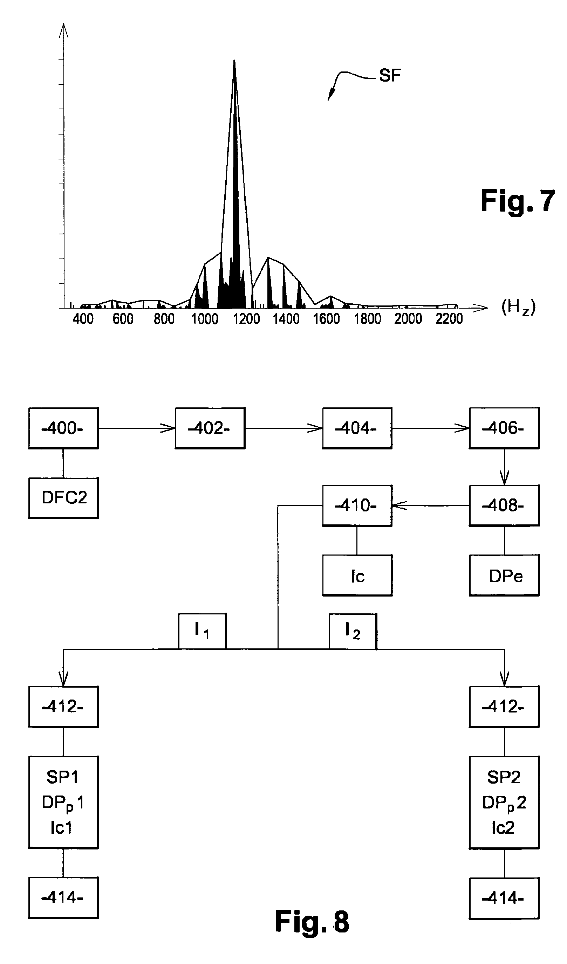

Lors d'une étape 102, on applique une transformée de Fourier au signal temporel ST afin d'obtenir un spectre fréquentiel SF illustré sur la figure 7. En plus d'être susceptible de comprendre les premier et deuxième spectres fréquentiels SF1, SF2 respectivement des premier et deuxième bruits d'empreinte acoustique BEA1, BEA2, le spectre fréquentiel SF comprend, à la différence du spectre fréquentiel théorique SFT de la figure 5, de nombreuses composantes fréquentielles élémentaires provenant de bruit parasites tels que le vent, le bruit du moteur ou le bruit de la chaîne cinématique qui y est associée. Le procédé a notamment pour but de déterminer si le spectre SF comprend les spectres SF1, SF2 et ce, de préférence, en l'absence de la connaissance des caractéristiques du pneumatique 10 telles que le nombre N2 de témoins, la circonférence C du pneumatique 10 et la vitesse V du véhicule.

Lors des étapes 104 à 108 suivantes, on effectue un pré-traitement spectral du spectre fréquentiel SF de la figure 7. Lors d'une étape 104, on isole un domaine fréquentiel Df du spectre fréquentiel SF compris entre 500 et 2500 Hz, ici entre 1000 et 2000 Hz. Puis, dans une étape 106, on élimine le bruit et on normalise optionnellement le spectre SF dans le domaine fréquentiel Df. Enfin, dans une étape 108, on isole les composantes fréquentielles élémentaires du spectre filtré présentant une intensité supérieure à un seuil d'intensité prédéterminé.

On obtient ainsi un spectre fréquentiel S comprenant plusieurs composantes fréquentielles élémentaires. Le spectre S est donc obtenu par traitement du signal acoustique temporel ST. En variante, les étapes de pré-traitement peuvent ne pas avoir lieu ou bien d'autres étapes de traitement supplémentaires sont mises en oeuvre.

On va maintenant décrire en référence à la figure 8 des étapes 400 à 410 d'énumération d'au moins un spectre fréquentiel SH, dit hypothétique de composantes fréquentielles élémentaires Si à partir des composantes fréquentielles Si élémentaires du spectre S.

Tout d'abord, on détermine des premier et deuxième intervalles I1, I2 d'écarts fréquentiels DP de façon à ce que chaque intervalle I1, 12 comprennent respectivement l'écart fréquentiel DP1 du spectre recherché SF1 et l'écart fréquentiel DP2 du spectre recherché SF2. En l'espèce, la vitesse V du véhicule pouvant varier de 30 à 130 km.h⁻¹, le nombre N1 de macro-motifs étant compris dans l'intervalle [N1,min; N1, max], ici N1,min=1 N1,max=1, le nombre N2 de témoin TUS étant compris dans l'intervalle [N2,min; N2,max], ici N2,min=2 et N2,max=8, et la circonférence C pouvant varier de 1,6 à 2,5 m, chaque intervalle I1, 12 est tel que I1=[3,3 Hz, 22,6 Hz] et 12=[6,6 Hz, 180,5 Hz].

Chaque composante fréquentielle élémentaire Si de chaque spectre hypothétique SH est distante fréquentiellement d'au moins une composante fréquentielle élémentaire adjacente Si du spectre hypothétique SH d'un écart fréquentiel d'énumération DPe prédéterminé, de préférence, appartenant à au moins un des intervalles 11, 12.

Dans une étape 400, on énumère tous les couples de composantes Si du spectre S et on détermine un écart fréquentiel DFCk séparant les composantes Si de chaque couple k l'une de l'autre.

Dans une étape 402, on retient les couples k pour lesquels l'écart fréquentiel DFCk appartient à un des intervalles I1, 12.

Dans une étape 404, on classe chaque écart fréquentiel DFCk de chaque couple k retenu dans une famille, dite d'écart fréquentiel, définie par un intervalle d'écart fréquentiel familial σ_{F}. En l'espèce, tous les intervalles σ_{F} sont inférieurs ou égaux à 0,5 Hz.

Dans une étape 406, parmi les couples de composantes énumérés, on détermine les couples dont l'écart fréquentiel les séparant appartient à un même intervalle d'écart fréquentiel familial σ_{F}.

Puis, dans une étape 408, on énumère les spectres hypothétiques SH tels que définis ci-dessus. En outre, on détermine une caractéristique fréquentielle de chaque spectre fréquentiel hypothétique SH, en l'espèce l'écart fréquentiel d'énumération DPe=σ_{F} séparant fréquentiellement chaque composante fréquentielle Si du spectre hypothétique SH d'au moins une composante fréquentielle adjacente Si du spectre hypothétique SH.

Puis, dans les étapes 410 à 414, on sélectionne des spectres fréquentiels SP1, SP2, dits potentiels, parmi les spectres hypothétiques SH.

Dans l'étape 410, pour chaque spectre hypothétique énuméré SH, on détermine un indice de confiance Ic, dit de sélection, associé à la sélection de chaque spectre hypothétique SH à partir d'au moins une caractéristique d'au moins une composante fréquentielle Si de chaque spectre hypothétique SH énuméré. En l'espèce, on détermine l'indice Ic à partir d'une dispersion D_{E} de l'écart fréquentiel entre les composantes fréquentielles élémentaires Si du spectre, un rapport R entre le signal acoustique et le bruit, le nombre Nₛ de composantes fréquentielles élémentaires dans le spectre et la densité D de la spectre, c'est-à-dire le rapport du nombre total de composantes fréquentielles élémentaires sur le nombre maximum de composantes fréquentielles élémentaires possibles.

Dans l'étape 412, on identifie, parmi les spectres hypothétiques SH présentant un écart fréquentiel DPe appartenant à l'intervalle I1, un premier spectre potentiel SP1 susceptible de former le spectre SF1, SF2 d'un des premier et deuxième bruits d'empreinte acoustique BEA1, BEA2. Le premier spectre potentiel SP1 présente un écart fréquentiel DPp1 et un indice Ic=Ic1 le plus élevé parmi les indices Ie des spectres énumérés et dont l'écart fréquentiel DPe appartient à l'intervalle I1. Dans l'étape 414, on sélectionne le premier spectre potentiel SP1 si l'indice Ic1 satisfait une condition prédéterminée relative à la sélection du premier spectre potentiel, en l'espèce si Ic1 est supérieur ou égal à un seuil prédéterminé.

De façon analogue, on identifie, parmi les spectres hypothétiques SH présentant un écart fréquentiel DPe appartenant à l'intervalle 12, un deuxième spectre potentiel SP2 susceptible de former l'autre spectre fréquentiel SF1, SF2 des premier et deuxième bruits d'empreinte acoustique BEA1, BEA2. Le deuxième spectre potentiel SP2 présente un écart fréquentiel DPp2 et un indice Ic=Ic2 le plus élevé parmi les indices Ic des séries énumérées et dont l'écart fréquentiel DPe appartient à l'intervalle 12. On sélectionne le deuxième spectre potentiel SP2 si l'indice Ic2 satisfait une condition prédéterminée relative à la sélection du deuxième spectre potentiel, en l'espèce si Ic2 est supérieur ou égal à un seuil prédéterminé.

Dans le cas où chaque indice Ic1, Ic2 est inférieur au seuil correspondant ou bien que l'un des indices est inférieur au seuil correspondant, on retourne à l'étape 100.

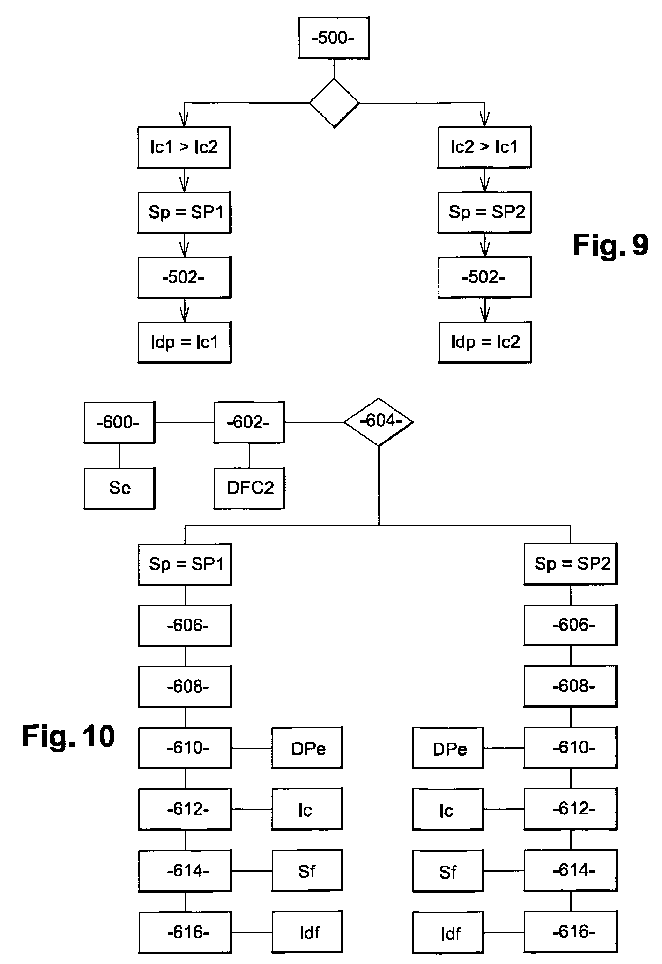

On a représenté sur la figure 9 un organigramme illustrant des étapes permettant de sélectionner un spectre Sp, dit spectre père et susceptible de former le spectre fréquentiel de l'un des premier et deuxième bruits d'empreinte acoustique BEA1, BEA2.

Dans une étape 500, on sélectionne, parmi les premier et deuxième spectres potentiels SP1, SP2, le spectre père Sp. Le spectre père Sp est celui dont l'indice de confiance de sélection Ic est le plus grand parmi les indices Ic1, Ic2. Dans ce mode de réalisation, Ic2>Ic1. Le deuxième spectre potentiel SP2 forme donc le spectre père Sp. En l'espèce, le spectre père Sp=SP2 présente un écart fréquentiel DPp=DPp2= 77,5 ± 1 Hz et un indice Icp=Ic2. Le spectre père Sp comprend les composantes fréquentielles élémentaires Si en traits gras sur la figure 7. En variante, si Ic1>Ic2, le spectre père Sp=SP1 présente un écart fréquentiel DPp=DPp1= 12,5 ± 1 Hz et un indice Icp=Ic1.

Dans une étape 502, dans le cas où Ic2>Ic1, on détermine un indice de confiance Idp, dit de détection, associé à la détection d'un des bruits d'empreinte acoustique BEA1, BEA2 à partir d'une caractéristique du spectre père Sp, ici SP2. En l'espèce, Idp=Icp. En variante, Idp est calculé à partir d'autres caractéristiques que D_{E}, R, N_{S} et D. Dans le cas où Ic2<Ic1, on détermine un indice de confiance de détection Idp à partir d'une caractéristique du spectre père SP1.

On a représenté sur la figure 10 un organigramme illustrant des étapes permettant de sélectionner un spectre Sf, dit spectre fils et susceptible de former le spectre fréquentiel de l'autre des premier et deuxième bruits d'empreintes acoustiques BEA1, BEA2.

Dans une étape 600, on supprime, du spectre S du signal acoustique, au moins en partie le spectre père Sp, en l'espèce au moins une partie des composantes fréquentielles Si du spectre père Sp. En l'espèce, on conserve les composantes fréquentielles élémentaires du spectre père Sp présentant une densité spectrale de puissance supérieure ou égale à un seuil prédéterminé, c'est-à-dire que l'on supprime les composantes fréquentielles élémentaires du spectre Sp présentant une densité spectrale de puissance inférieure au seuil prédéterminé. On obtient un spectre fréquentiel Se élagué de certaines composantes Si du spectre père Sp.

Dans des étapes 602 à 612, on énumère des spectres hypothétiques SHf de composantes fréquentielles élémentaires Si à partir du spectre Se en mettant en oeuvre des étapes analogues aux étapes 400 à 408. Chaque composante fréquentielle élémentaire Si de chaque spectre hypothétique SHf est distante fréquentiellement d'au moins une composante fréquentielle élémentaire adjacente Si du spectre hypothétique SHf d'un écart fréquentiel d'énumération DPe déterminé à partir d'une caractéristique fréquentielle du spectre père Sp, ici l'écart fréquentiel DPp.

Ainsi, dans une étape 602, on énumère tous les couples de composantes Si du spectre élagué Se et on détermine un écart fréquentiel DFCk séparant les composantes Si de chaque couple k l'une de l'autre.

Dans une étape 604, dans le cas où Sp=SP2=77,5 Hz, on retient les couples pour lesquels l'écart fréquentiel DFCk appartient à un intervalle 13 = [N1,min / N2,max * (DPp2-Ee), N1,max / N2,min * (DPp2+Ee)] = [1/8x76,5, 1/2x78,5] = [9,6, 39,3] dans lequel Ee est un écart fréquentiel représentant l'erreur estimée sur la valeur de l'écart fréquentiel DPp1 du spectre père Sp, ici Ee=1 Hz. Dans le cas où Sp=SP1=12,5 Hz, on retient les couples pour lesquels l'écart fréquentiel DFCk appartient à un intervalle 13 = [N2,min / N1,max * (DPp1-Ee), N2,max / N1,min * (DPp1+Ee)] = [2/1x11,5, 8/1x13,5] = [23 Hz, 108 Hz].

Ainsi, on limite la sélection du spectre fréquentiel fils Sf aux spectres hypothétiques SHf dont l'écart fréquentiel DFCk est compris dans l'intervalle d'écarts fréquentiels I3 déterminé à partir de l'écart fréquentiel DPp1 du spectre père Sp.

Dans une étape 606, on classe chaque écart fréquentiel DFCk de chaque couple de composantes Si dans une famille, dite d'écart fréquentiel, définie par un intervalle d'écart fréquentiel familial σ_{F}. En l'espèce, tous les intervalles σ_{F} sont inférieurs ou égaux à 0,5 Hz.

Dans une étape 608, parmi les couples de composantes énumérés, on détermine les couples de composantes dont l'écart fréquentiel les séparant appartient à un même intervalle d'écart fréquentiel familial σ_{F}.

Puis, dans une étape 610, on énumère les spectres SHf tels que définis ci-dessus. En outre, on détermine une caractéristique fréquentielle de chaque spectre fréquentiel hypothétique SHf, en l'espèce l'écart fréquentiel d'énumération DPe=σ_{F} séparant fréquentiellement chaque composante fréquentielle Si du spectre hypothétique SHf d'au moins une composante fréquentielle adjacente Si du spectre hypothétique SHf.

Puis, dans une étape 612, pour chaque spectre hypothétique énuméré SHf, on détermine un indice de confiance de sélection Ic associé à la sélection de chaque spectre hypothétique SHf à partir d'au moins une caractéristique d'au moins une composante fréquentielle Si de chaque spectre hypothétique SHf énuméré. On détermine l'indice Ic de façon analogue à l'indice Ic calculé à l'étape 410.

Ensuite, dans une étape 614, on sélectionne le spectre fils Sf parmi les spectres SHf. Le spectre fils Sf présente l'indice Ic=Icf le plus élevé parmi les indices Ic des spectres énumérés. Le spectre fils Sf comprend les composantes fréquentielles élémentaires Si en traits fins sur la figure 7.

Dans une étape 616, on détermine un indice de confiance Idf, dit de détection, associé à la détection de l'autre bruit d'empreinte acoustique BEA1, BEA2 à partir d'une caractéristique du spectre fils Sf. On calcule l'indice Idf de façon analogue à l'indice Idp.

Enfin, lors d'une étape de prise de décision, si chaque indice de confiance de détection Idp, Idf satisfait une condition prédéterminée relative à la détection de chaque bruit d'empreinte acoustique BEA1, BEA2, on émet une alerte de la détection de l'usure du pneumatique 10. En l'espèce, les conditions relatives à la détection du bruit d'empreinte acoustique BEA1 et BEA2 sont identiques. Chaque indice Idp, Idf satisfait la condition prédéterminée lorsque chaque indice Idp, Idf est supérieur ou égal à un seuil prédéterminé. Dans le cas où chaque indice de confiance de détection Idp, Idf, ou bien dans le cas où un seul des indices Idp, Idf ne satisfait pas la condition prédéterminée correspondante, on n'émet pas d'alerte de la détection de l'usure du pneumatique 10 et on retourne à l'étape 100.

L'invention ne se limite pas au mode de réalisation décrit ci-dessus, son cadre étant défini par les revendications ci-jointes.

En effet, le procédé selon l'invention peut être également mis en oeuvre en connaissant tout ou partie des paramètres du pneumatique déterminant les écarts fréquentiels DPT1, DPT2. Ainsi, en connaissant le nombre N_{TUS} de témoins 17, notamment parce que tous les pneumatiques comportant ce type de témoins 17 en comporte un nombre identique, la circonférence C du pneumatique 10 et la vitesse V du pneumatique 10, par exemple à partir d'un GPS (Global Positionning System), on réduit les intervalles I1, I2 et I3 et on améliore la robustesse de la détection. Les peignes de Dirac sont donc d'autant plus uniques et faciles à détecter que les paramètres du pneumatique sont connus avec précision.

Tout ou partie du procédé selon l'invention pourra être mis en oeuvre par le biais d'instructions de code aptes à commander l'exécution des étapes du procédé lorsqu'il est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication tel que le réseau Internet ou un réseau sans fil. Des mises à jour du programme pourront ainsi être envoyées par ce réseau aux ordinateurs connectés au réseau.

Au cours du procédé de détection, on détecte par un capteur acoustique embarqué sur le véhicule le signal acoustique temporel et on émet, vers un serveur distant non-embarqué sur le véhicule automobile, des informations relatives au signal acoustique. Le procédé comprend, préalablement à l'étape d'émission, un pré-traitement du signal acoustique réalisé à bord du véhicule.

Dans un mode de réalisation, le pré-traitement comprend l'étape 100 et on effectue les étapes ultérieures sur le serveur distant. Ainsi, on évite d'avoir à disposer d'un dispositif embarqué dans le véhicule présentant nécessairement des performances élevées. En outre, les mises à jour du procédé peuvent être directement effectuées sur le serveur.

Dans un autre mode de réalisation, le pré-traitement comprend les étapes 100 et 102 et on effectue les étapes ultérieures sur le serveur distant.

Dans encore un autre mode de réalisation, le pré-traitement comprend les étapes 100 à 108 et on effectue les étapes ultérieures sur le serveur distant. Ainsi, on réduit le volume des données émises depuis le véhicule.

Ces caractéristiques relatives à l'étape de pré-traitement pourront être exploitées indépendamment des étapes selon lesquelles:
- on acquiert un signal acoustique susceptible de comprendre les premier et deuxième bruits d'empreintes acoustiques,
- on sélectionne, dans le spectre fréquentiel du signal acoustique acquis, un spectre fréquentiel, dit spectre père, susceptible de former le spectre fréquentiel de l'un des premier et deuxième bruits d'empreintes acoustiques,
- on détermine un spectre fréquentiel, dit élagué, en supprimant, du spectre du signal acoustique, au moins en partie le spectre père,
- on sélectionne, dans le spectre élagué, un spectre fréquentiel, dit spectre fils, susceptible de former le spectre fréquentiel de l'autre des premier et deuxième bruits d'empreintes acoustiques,
- on détermine deux indices de confiance, dit de détection, associés à la détection des premier et deuxième bruits d'empreinte acoustique à partir d'au moins une caractéristique de chaque spectre père et fils sélectionné,
- si chaque indice de confiance de détection satisfait une condition prédéterminée relative à la détection de chaque premier et deuxième bruit d'empreinte acoustique, on émet une alerte de la détection de l'usure du pneumatique.

## Revendications

1. Procédé de détection de l'usure d'un pneumatique (10), le pneumatique (10) comprenant au moins un premier élément (14A) de sculpture apte à générer un premier bruit d'empreinte acoustique (BEA1) et au moins un deuxième élément (14B) de sculpture apte à générer un deuxième bruit d'empreinte acoustique (BEA2) caractéristique de l'usure du pneumatique (10), procédé **caractérisé en ce que** :
- on acquiert un signal acoustique (ST) susceptible de comprendre les premier et deuxième bruits d'empreintes acoustiques (BEA1, BEA2),
- on sélectionne, dans le spectre fréquentiel (S) du signal acoustique acquis (ST), un spectre fréquentiel (Sp), dit spectre père, susceptible de former le spectre fréquentiel de l'un des premier et deuxième bruits d'empreintes acoustiques (BEA1, BEA2),
- on détermine un spectre fréquentiel (Se), dit élagué, en supprimant, du spectre (S) du signal acoustique (ST), au moins en partie le spectre père (Sp),
- on sélectionne, dans le spectre élagué (Se), un spectre fréquentiel (Sf), dit spectre fils, susceptible de former le spectre fréquentiel de l'autre des premier et deuxième bruits d'empreintes acoustiques (BEA1, BEA2),
- on détermine deux indices de confiance (Icd1, Icd2), dit de détection, associés à la détection des premier et deuxième bruits d'empreinte acoustique (BEA1, BEA2) à partir d'au moins une caractéristique de chaque spectre père et fils (Sp, Sf) sélectionné,
- si chaque indice de confiance de détection (Icd1, Icd2) satisfait une condition prédéterminée relative à la détection de chaque premier et deuxième bruit d'empreinte acoustique (BEA1, BEA2), on émet une alerte de la détection de l'usure du pneumatique (10).

2. Procédé selon la revendication précédente, dans lequel, le spectre père (Sp) comprenant des composantes fréquentielles élémentaires, on conserve les composantes fréquentielles élémentaires du spectre père présentant une densité spectrale de puissance supérieure à un seuil prédéterminé.

3. Procédé selon l'une quelconque des revendications précédentes, dans lequel on énumère au moins un spectre fréquentiel (SH), dit hypothétique et on détermine au moins une caractéristique fréquentielle (DPe) de chaque spectre hypothétique (SH).

4. Procédé selon la revendication précédente, dans lequel, pour chaque spectre hypothétique (SH), on détermine un indice de confiance (Ic), dit de sélection, associé à la sélection du spectre hypothétique (SH).

5. Procédé selon la revendication 3 ou 4, dans lequel, chaque spectre hypothétique (SH) comprenant des composantes fréquentielles élémentaires (Si), la caractéristique fréquentielle (DPe) du spectre hypothétique est l'écart fréquentiel séparant fréquentiellement chaque composante fréquentielle (Si) de chaque spectre hypothétique (SH) d'au moins une composante fréquentielle (Si) adjacente du spectre hypothétique (SH).

6. Procédé selon la revendication précédente, dans lequel on limite la sélection du spectre fils (Sf) aux spectres hypothétiques (SH) dont l'écart fréquentiel (DFCk) est compris dans un intervalle d'écarts fréquentiels (13) déterminé à partir de l'écart fréquentiel (DPp) du spectre père (Sp).

7. Procédé selon l'une quelconque des revendications précédentes, dans lequel, on sélectionne, dans le spectre fréquentiel (S) du signal acoustique acquis (ST), des premier et deuxième spectres fréquentiels (SP1, SP2), dits potentiels, chaque spectre fréquentiel potentiel (SP1, SP2) étant susceptible de former le spectre fréquentiel (SF1, SF2) d'un des bruits d'empreinte acoustique (BEA1, BEA2) et on sélectionne le spectre père parmi les premier et deuxième spectres fréquentiels potentiels (SP1, SP2).

8. Procédé selon les revendications 5 et 7 prises ensembles, dans lequel on sélectionne les premier et deuxième spectres potentiels (SP1, SP2) parmi les spectres hypothétiques (SH) présentant un écart fréquentiel (DPe) appartenant respectivement à des premier et deuxième intervalles (I1, 12) d'écarts fréquentiels prédéterminés.

9. Programme d'ordinateur, **caractérisé en ce qu'**il comprend des instructions de code aptes à commander l'exécution des étapes d'un procédé selon l'une quelconque des revendications précédentes lorsqu'il est exécuté sur un ordinateur.

10. Support d'enregistrement de données comprenant, sous forme enregistrée, un programme selon la revendication 9.

11. Procédé de mise à disposition d'un programme selon la revendication 9 sur un réseau de télécommunication en vue de son téléchargement.

## Patentansprüche

1. Verfahren zur Erkennung des Verschleißes eines Reifens (10), wobei der Reifen (10) wenigstens ein erstes Profilelement (14A), das geeignet ist, ein erstes akustisches Fingerabdruckgeräusch (BEA1) zu erzeugen, und wenigstens ein zweites Profilelement (14B), das geeignet ist, ein zweites akustisches Fingerabdruckgeräusch (BEA2), das für den Verschleiß des Reifens (10) charakteristisch ist, zu erzeugen, wobei das Verfahren **dadurch gekennzeichnet ist, dass**:
- ein akustisches Signal (ST) erfasst wird, welches das erste und das zweite akustische Fingerabdruckgeräusch (BEA1, BEA2) enthalten kann,
- in dem Frequenzspektrum (S) des erfassten akustischen Signals (ST) ein "Vater-Spektrum" genanntes Frequenzspektrum (Sp) ausgewählt wird, welches das Frequenzspektrum des einen von dem ersten und dem zweiten akustischen Fingerabdruckgeräusch (BEA1, BEA2) bilden kann,
- ein sogenanntes "ausgelichtetes" Frequenzspektrum (Se) bestimmt wird, indem von dem Spektrum (S) des akustischen Signals (ST) das Vater-Spektrum (Sp) wenigstens zum Teil unterdrückt wird,
- in dem ausgelichteten Spektrum (Se) ein "Sohn-Spektrum" genanntes Frequenzspektrum (Sf) ausgewählt wird, welches das Frequenzspektrum des anderen von dem ersten und dem zweiten akustischen Fingerabdruckgeräusch (BEA1, BEA2) bilden kann,
- zwei "Erkennungs-Vertrauensindizes" genannte Vertrauensindizes (Icd1, Icd2), die der Erkennung des ersten bzw. zweiten akustischen Fingerabdruckgeräusches (BEA1, BEA2) zugeordnet sind, ausgehend von jeweils wenigstens einer Kenngröße des ausgewählten Vater- und des ausgewählten Sohn-Spektrums (Sp, Sf) bestimmt werden,
- falls jeder Erkennungs-Vertrauensindex (Icd1, Icd2) eine vorbestimmte Bedingung bezüglich der Erkennung sowohl des ersten als auch des zweiten akustischen Fingerabdruckgeräusches (BEA1, BEA2) erfüllt, eine Warnmeldung der Erkennung des Verschleißes des Reifens (10) ausgegeben wird.

2. Verfahren nach dem vorhergehenden Anspruch, wobei, wenn das Vater-Spektrum (Sp) elementare Frequenzkomponenten enthält, die elementaren Frequenzkomponenten des Vater-Spektrums bewahrt werden, die eine spektrale Leistungsdichte aufweisen, welche größer als ein vorbestimmter Schwellenwert ist.

3. Verfahren nach einem der vorhergehenden Ansprüche, wobei wenigstens ein "hypothetisches Spektrum" genanntes Frequenzspektrum (SH) aufgeführt wird und wenigstens eine Frequenzcharakteristik (DPe) jedes hypothetischen Spektrums bestimmt wird.

4. Verfahren nach dem vorhergehenden Anspruch, wobei für jedes hypothetische Spektrum (SH) ein "Auswahl-Vertrauensindex" genannter Vertrauensindex (Ic) bestimmt wird, welcher der Auswahl des hypothetischen Spektrums (SH) zugeordnet ist.

5. Verfahren nach Anspruch 3 oder 4, wobei, wenn jedes hypothetische Spektrum (SH) elementare Frequenzkomponenten (Si) enthält, die Frequenzcharakteristik (DPe) des hypothetischen Spektrums der Frequenzabstand ist, der jede Frequenzkomponente (Si) jedes hypothetischen Spektrums (SH) frequenzmäßig von wenigstens einer benachbarten Frequenzkomponente (Si) des hypothetischen Spektrums (SH) trennt.

6. Verfahren nach dem vorhergehenden Anspruch, wobei die Auswahl des Sohn-Spektrums (Sf) auf die hypothetischen Spektren (SH) begrenzt wird, deren Frequenzabstand (DFCk) in einem Intervall von Frequenzabständen (I3) enthalten ist, das ausgehend von dem Frequenzabstand (DPp) des Vater-Spektrums (Sp) bestimmt wird.

7. Verfahren nach einem der vorhergehenden Ansprüche, wobei in dem Frequenzspektrum (S) des erfassten akustischen Signals (ST) ein erstes und ein zweites sogenanntes "potentielles" Frequenzspektrum (SP1, SP2) ausgewählt werden, wobei jedes potentielle Frequenzspektrum (SP1, SP2) das Frequenzspektrum (SF1, SF2) eines der akustischen Fingerabdruckgeräusche (BEA1, BEA2) bilden kann, und wobei das Vater-Spektrum aus dem ersten und dem zweiten potentiellen Frequenzspektrum (SP1, SP2) ausgewählt wird.

8. Verfahren nach den Ansprüchen 5 und 7 zusammengenommen, wobei das erste und das zweite potentielle Spektrum (SP1, SP2) aus den hypothetischen Spektren (SH) ausgewählt werden, die einen Frequenzabstand (DPe) aufweisen, der einem ersten bzw. zweiten vorbestimmten Intervall (I1, I2) von Frequenzabständen angehört.

9. Computerprogramm, **dadurch gekennzeichnet, dass** es Codeanweisungen enthält, welche die Ausführung der Schritte eines Verfahrens nach einem der vorhergehenden Ansprüche steuern können, wenn es auf einem Computer ausgeführt wird.

10. Datenspeicherträger, der in gespeicherter Form ein Programm nach Anspruch 9 enthält.

11. Verfahren zur Bereitstellung eines Programms nach Anspruch 9 in einem Telekommunikationsnetz für sein Herunterladen.

## Claims

1. Method of detecting the wear of a tyre (10), the tyre (10) comprising at least a first tread pattern element (14A) adapted to generate a first acoustic footprint noise (BEA1) and at least a second tread pattern element (14B) adapted to generate a second acoustic footprint noise (BEA2) characteristic of the wear of the tyre (10), the method being **characterized in that**:
- an acoustic signal (ST) capable of comprising the first and second acoustic footprint noises (BEA1, BEA2) is acquired,
- within the frequency spectrum (S) of the acquired acoustic signal (ST), a frequency spectrum (Sp), called the parent spectrum, is selected, this spectrum being capable of forming the frequency spectrum of one of the first and second acoustic footprint noises (BEA1, BEA2),
- a frequency spectrum (Se) called a trimmed spectrum is determined by eliminating at least part of the parent spectrum (Sp) from the spectrum (5) of the acoustic signal (ST),
- within the trimmed spectrum (Se), a frequency spectrum (Sf), called the child spectrum, is selected, this spectrum being capable of forming the frequency spectrum of the other of the first and second acoustic footprint noises (BEA1, BEA2),
- two confidence indices (Icd1, Icd2), called detection confidence indices, are determined, these indices being associated with the detection of the first and second acoustic footprint noises (BEA1, BEA2) based on at least one characteristic of each selected parent and child spectrum (Sp, Sf),
- if each detection confidence index (Icd1, Icd2) meets a predetermined condition relating to the detection of each first and second acoustic footprint noise (BEA1, BEA2), a warning of the detection of the wear of the tyre (10) is emitted.

2. Method according to the preceding claim, wherein, the parent spectrum (Sp) comprising elementary frequency components, the elementary frequency components of the parent spectrum having a spectral power density above a predetermined threshold are retained.

3. Method according to either of the preceding claims, wherein at least one frequency spectrum (SH), called the hypothetical spectrum, is listed, and at least one frequency characteristic (DPe) of each hypothetical spectrum (SH) is determined.

4. Method according to the preceding claim, wherein, for each hypothetical spectrum (SH), a confidence index (Ic), called the selection index, is determined, this index being associated with the selection of the hypothetical spectrum (SH).

5. Method according to Claim 3 or 4, wherein, each hypothetical spectrum (SH) comprising elementary frequency components (Si), the frequency characteristic (DPe) of the hypothetical spectrum is the frequency difference separating each frequency component (Si), in frequency, from each hypothetical spectrum (SH) of at least one adjacent frequency component (Si) of the hypothetical spectrum (SH).

6. Method according to the preceding claim, wherein the selection of the child spectrum (Sf) is limited to the hypothetical spectra (SH) whose frequency difference (DFCk) lies within a range of frequency differences (I3) determined on the basis of the frequency difference (DPp) of the parent spectrum (Sp).

7. Method according to any of the preceding claims, wherein first and second frequency spectra (SP1, SP2), called potential spectra, are selected within the frequency spectrum (S) of the acquired acoustic signal (ST), each potential frequency spectrum (SP1, SP2) being capable of forming the frequency spectrum (SF1, SF2) of one of the acoustic footprint noises (BEA1, BEA2), and the parent spectrum is selected from among the first and second potential frequency spectra (SP1, SP2).

8. Method according to Claims 5 and 7 considered in combination, wherein the first and second potential spectra (SP1, SP2) are selected from among the hypothetical spectra (SH) having a frequency difference (DPe) belonging, respectively, to first and second ranges (I1, I2) of predetermined frequency differences.

9. Computer program, **characterized in that** it comprises coded instructions adapted to command the execution of the steps of a method according to any of the preceding claims when it is run on a computer.

10. Data recording medium comprising, in recorded form, a program according to Claim 9.

11. Method of providing a program according to Claim 9 on a telecommunications network for downloading.
